# EUROPÄISCHE PATENTSCHRIFT

(11) **EP 1 442 839 B1**
(45) Veröffentlichungstag und Bekanntmachung des Hinweises auf die Patenterteilung: **21.12.2011**
(21) Anmeldenummer: 04001553.9
(22) Anmeldetag: 26.01.2004
(51) Int. Cl.: B23Q 3/18, B24B 37/00

(54) **Verfahren und Vorrichtung zum Handhaben von Wafern**
Method and apparatus for handling wafers
Procédé et dispositif pour manipuler des plaquettes

(30) Priorität: 29.01.2003 DE 10303460
(43) Veröffentlichungstag der Anmeldung: 04.08.2004
(73) Patentinhaber: Infineon Technologies AG, 85579 Neubiberg (DE)
(72) Erfinder: Aigner, Kurt, Dr., 9073 Viktring (AT); Matschitsch, Martin, 9181 Feistritz i. Ros (AT); Binder, Alfred, 9023 Landskron (AT); Kalin, Thomas, 9521 Treffen (AT); Maunz, Ingomar, 9500 Villach (AT)
(74) Vertreter: Kindermann, Peter

(56) Entgegenhaltungen:
- EP-A- 0 506 045

## Beschreibung

Die Erfindung betrifft ein Verfahren und eine Vorrichtung zum Handhaben von Halbleiterwafern. Insbesondere sollen dünne Wafer gehandhabt werden, d.h. Wafer, die bereits um mehr als die Hälfte ihrer ursprünglichen Dicke gedünnt worden sind. Beim Handhaben werden die Wafer aus Behandlungsvorrichtungen oder Materialträgern entnommen und wieder in Behandlungsvorrichtungen oder Materialträger eingesetzt.

Bisher wurden Halbleiterwafer, insbesondere dünne Wafer, manuell aus den Materialträgern entladen und ebenfalls manuell wieder in Materialträger eingesetzt, um diese zu beladen.

Obwohl die Be- und Entladevorgänge nur von speziell geschultem Personal durchgeführt werden, ist die Bruchrate, insbesondere wenn es sich um Dünnwafer handelt, beim manuellen Handhaben relativ hoch.

Ein weiterer Nachteil ist es, dass die sehr sensiblen Bewegungsabläufe der einzelnen Vorgänge nur unter großem persönlichen Einsatz der Bedienungsperson ausgeführt werden können. Dementsprechend ist auch der zeitliche Aufwand für das manuelle Handhaben von Wafern, insbesondere von dünnen Wafern, sehr hoch.

Problematisch ist außerdem, dass das Entnehmen und Einsetzen, insbesondere das automatische Entnehmen und Einsetzen, der mechanisch wenig belastbaren Wafer aus bzw. in Materialträger, wie z.B. Horden, Quarzboote und ähnliche Vorrichtungen ohne Berühren der Kanten der Wafer erfolgen soll.

Bislang wurde wegen der geschilderten Probleme auf automatisierte Verfahren verzichtet, weil die Wafer nicht zentriert sind und auch nicht eben bzw. flach in den Materialträgern abgelegt sind, und damit eine kontrollierte Entnahme der gebogenen bzw. gewölbten Wafer nicht gewährleistet ist. Die Ausrichtung des Flat, d.h. einer Abflachung am Umfangsrand des Wafers, wurde bislang mit Hilfe von sogenannten Flatalign-Vorrichtungen durchgeführt, die jedoch beispielsweise für Dünnwafer nicht geeignet sind.

Das Handhaben erfolgte demnach bisher durch manuelles Entladen und Bestücken der Materialträger. Nicht geeignet für das Handhaben von Wafern im Zusammenhang mit Horden sind Greifer mit Pins, die einen Wafer zentrieren.

Aus der WO 99/17244 ist ein Subtrattransportapparat bekannt, der zum Entnehmen von Wafern aus Horden geeignet ist und keine Pins besitzt. Ein CCD Sensor oder ein analoger Sensor befindet sich an einem Gelenk, um die Position des Substrats zu detektieren. Der Sensor ist an dem Gelenk derart angeordnet, dass wenn das Substrat durch die rotierende Oberfläche 44 gehalten wird, ein Abschnitt des Substrats über den Sensor lokalisiert werden kann. Die WO 02/02282 A1 betrifft einen an Kanten angreifenden Vor-Ausrichter. Ein unterer Arm eines Sensors enthält einen Siliziumdiodenempfänger, der ein Detektionsfenster hat, das auch schmal und lang ist, wie eine Kollimatoroptik, und ist ausgerichtet mit der Apertur der Kollimatoroptik. Die EP 1 091 389 A2 betrifft einen Bernoulli- und Vakuum-Kombigreifer zum Aufnehmen von Dünnwafern. Die EP 0 246 117 A3 betrifft einen Wafer-Orientierer. Ein Ende eines Sensors ist normal zu der Oberfläche des Wafers gerichtet, d.h. das Ende einer zweigeteilten Faser Optik.

Aus der EP 0 506 045 A2 ist eine Lade-Verschluss-Einheit bekannt, die einen Elektrochuck und eine Lasereinheit zur Lageerkennung eines Wafers enthält.

Der Erfindung liegt die Aufgabe zu Grunde, ein Verfahren und eine Vorrichtung anzugeben, mit der das Handhaben von Halbleiterwafern, d.h. von Wafern mit einer Dicke im Bereich von 50 µm bis 200 µm, möglich ist. Insbesondere soll eine zentrierte Ablage der Wafer mit einer bestimmten Drehlage, z.B. mit in eine bestimmte Lage ausgerichtetem "Flat", d.h. einer Abflachung am Rand eines Wafer, oder "Notch", d.h. einer Kerbe am Rand von Wafern mit mehr als 200mm Durchmesser, möglich sein. Gelöst wird die auf das Verfahren bezogene Aufgabe in erster Linie mit einem Verfahren, das die Merkmale des Anspruches 1 aufweist.

Bevorzugte und vorteilhafte Ausgestaltungen des Verfahrens der Erfindung sind Gegenstand der Unteransprüche.

Insoweit die Vorrichtung betroffen ist, wird die erfindungsgemäße Aufgabe mit einer Vorrichtung mit den Merkmalen des Vorrichtungs anspruches 10 gelöst.

Vorteilhafte und bevorzugte Weiterbildungen der erfindungsgemäßen Vorrichtung sind Gegenstand der vom Vorrichtungsanspruch 10 abhängigen Unteransprüche.

Bei der Erfindung ist das automatisierte Handhaben von Halbleiterwafern, auch von dünnen Halbleiterwafern, durch einen Greifer möglich, der auf einem Roboterarm montiert ist. Es besteht die Möglichkeit, sämtliche bekannte Roboter mit einem solchen Greifer zu bestücken und damit die Gegenstände nach dem erfindungsgemäßen Verfahren zu handhaben.

Von Vorteil bei der Erfindung ist es, dass das Erfassen des zu handhabenden Gegenstandes bzw. Wafers mit Hilfe eines Greifers erfolgen kann, der an seinem Träger bzw. "chuck" mit Bernoulli-Düsen ausgerüstet ist. Aus diesen Düsen strömt ein Gas aus, das den Gegenstand bzw. Wafer am Träger auf Grund des als aerodynamisches Paradoxon bzw. als Bernoulli-Prinzip bezeichneten Unterdrucks festhält, der beim Vorbeiströmen des Gases am Gegenstand entsteht. Bei einer Ausgestaltung ist der Träger zusätzlich mit Öffnungen versehen, die mit Unterdruck beaufschlagt werden. Mit einem solchen Greifer kann der zu handhabende Wafer durch das Ausströmen von Gas aufgenommen, und dann durch Anlegen von Unterdruck an die mit Unterdruck beaufschlagten Öffnungen angesaugt und damit eben bzw. flach gemacht werden.
Mit anderen Worten wird der entkrümmt und in einer Ebene angeordnet. Nun wird der drehbare Träger an dem Greifer in Drehung versetzt und die Abweichung des Außenrandes des Wafers vom Zentrum der Drehung des Trägers mit Hilfe wenigstens eines Sensors erfasst. Aufgrund dieser so erfassten Lage des Wafers am Greifer wird der Roboter gesteuert, um den Wafer dann zentriert in eine weitere Behandlungsvorrichtung oder einen Träger abzugeben, z.B. in eine Horde oder in ein Boot.

Auch die Lage einer Markierung am Rand des Wafers, z.B. des "Flat" oder "Notch" eines Wafers, kann alternativ oder zusätzlich mit Hilfe des Sensors oder mit Hilfe eines weiteren Sensors erfasst werden, so dass es möglich ist, den Träger des Greifers so zu verdrehen, dass der Flat beim Ablegen des Wafers in eine weitere Behandlungsstufe bzw. einen weiteren Träger in der gewünschten Weise ausgerichtet ist.

Es wird also bei dem erfindungsgemäßen Verfahren so gearbeitet, dass ein insbesondere dünner Wafers mit Hilfe des Greifers mit dem Bernoulli/Vakuum-Träger aus einer Horde bzw. einem Boot entnommen wird. Der drehbare Bernoulli/Vakuum-Träger dreht den Wafers auf dem Greifer und ein Sensor misst die Abweichung des beispielsweise im wesentlichen kreisrunden Wafers vom Drehzentrum und erfasst die Position des Flats. Die Dezentrierung des Wafers, wird dem Steuerungssystem des Roboters, der den Greifer hält, übermittelt, so dass der Wafer auf dem nächsten Materialträger, z.B. ein Quarzboot und dgl., zentriert abgelegt werden kann. Das Einfügen des Wafers in den Materialträger, z.B. das Quarzboot, erfolgt unproblematisch und ohne Kantenkontakt des Wafers und mit in eine bestimmte Lage ausgerichtetem Flat.

Bei der Erfindung wird die nicht zentrierte Lage des Wafers auf dem Greifer über eine Sensorik erfasst. Auf Grund der von der Sensorik erfassten Dezentrierung ist ein korrigiertes Ablegen mit dem Roboter möglich.

Vorteilhaft ist es, dass der Bernoulli/Vakuum-Träger auch verbogene Gegenstände, wie Wafer, handhaben kann.

Bei der Erfindung ermöglichen ein in den Greifer integrierter drehbarer Träger und eine Sensorik zum Erkennen der Lage des Flat/Notch eine Korrektur der Lage des Flat/Notch auf dem Greifer selbst, insbesondere während der Bewegung des Greifers entlang einer vorgegebenen Bahn.

Alle üblichen Roboter können mit einem Greifer ausgerüstet werden, der das Ausführen der Erfindung erlaubt.

Insoweit die Vorrichtung gemäß der Erfindung betroffen ist, besitzt der bei einer Ausgestaltung der Erfindung verwendete Greifer wenigstens eines der nachstehenden Merkmale: Er ist an seinem Träger mit Bernoulli-Düsen ausgerüstet, um gebogene Wafer aufnehmen zu können. Er besitzt an seinem Träger weiterhin mit Unterdruck beaufschlagbare Öffnungen in seinem Greifer, um gebogene Wafer eben bzw. flach zu machen. Dadurch, dass der Träger in dem Greifer drehbar ist, und dass eine Erkennungssensorik für den äußeren Rand des Wafers und den Flat/Notch vorgesehen ist, während sich der Wafer dreht, ist auf dem Greifer selbst eine Flatkorrektur, d.h. ein Ausrichten des Flats in die gewünschte Lage, möglich, indem der Träger entsprechend gedreht wird.

Ein Rechner errechnet bei einer Ausgestaltung auf Grund der ihm übermittelten Daten des Sensor, d.h. abhängig von der durch die Rand-Erkennungssensorik erfassten Lage des Randes, die Dezentrierung, d.h. den Abstand des Wafer-Mittelpunktes vom Dreh-Zentrum des Trägers am Greifer, und die Lage des Flat. Der Rechner veranlasst durch Ansteuern des Drehantriebes des drehbaren Trägers die Korrektur der Flatlage und übermittelt die Dezentrierung der Robotersteuerung, so dass diese den Wafer zentriert und/oder mit ausgerichteter Markierung ablegen kann. Die Sensorik zum Erfassen der Lage des Wafers, insbesondere der Dezentrierung, und der Position des Flat kann beispielsweise mit Hilfe einer Leuchtdiode oder mit Hilfe eines Halbleiterlasers ausgeführt werden. Die Erfindung ist grundsätzlich bei beliebigen scheibenförmigen Gegenständen anwendbar und auch nicht auf eine bestimmte Größe des Gegenstandes bzw. Wafer beschränkt.

Weitere Einzelheiten, Vorteile und Merkmale der Erfindung ergeben sich aus der nachstehenden Beschreibung eines Ausführungsbeispieles unter Bezugnahme auf die Zeichnungen. Darin zeigen:
- Fig. 1: in Draufsicht schematisiert einen im Rahmen der Erfindung verwendbaren Greifer,
- Fig. 2: Einzelheiten des Greifers aus Fig. 1 im Bereich des Kantensensors,
- Fig. 3: in einem Flussdiagramm einen beispielhaften Ablauf des erfindungsgemäßen Verfahrens, und
- Fig. 4 bis 7: verschiedene Stufen beim Handhaben eines Wafers, während dieser seiner Horde entnommen und in eine Übergabestation abgegeben wird.

Ein erfindungsgemäßer Greifer 1 besitzt einen Grundkörper 2, in dem ein Träger 3 mit Hilfe eines nicht gezeigten Antriebs drehbar gelagert ist, z.B. mit Hilfe eines Miniaturantriebs flacher Bauform. In dem Träger 3 sind im gezeigten Ausführungsbeispiel ringartig angeordnet Düsen 5 vorgesehen, aus denen Druckgas ausströmen kann, um einen Wafer 10 durch nach dem Bernoulli-Prinzip entstehenden Unterdruck aufzunehmen und festzuhalten. Anstelle mehrerer Bernoulli-Düsen 5 kann auch eine ringförmige Bernoulli-Düse vorgesehen sein.

Im Außenbereich des Trägers 3, der auch als "chuck" bezeichnet wird, sind im gezeigten Ausführungsbeispiel zwei Reihen von kreisförmig angeordneten, mit Unterdruck beaufschlagbaren Öffnungen 6 vorgesehen. Diese mit Unterdruck beaufschlagbaren Öffnungen 6 dienen dazu, einen Wafer 10, der nach dem Bernoulli-Prinzip aufgenommen worden ist, an den Träger 3 des Greifers 1 heranzuziehen, um diesen eben bzw. flach zu machen, wobei auch von "flaten" gesprochen wird. Dies erlaubt das Handhaben von gebogenen oder gewölbten Wafern 10, auch wenn es sich um dünne Wafer handelt.

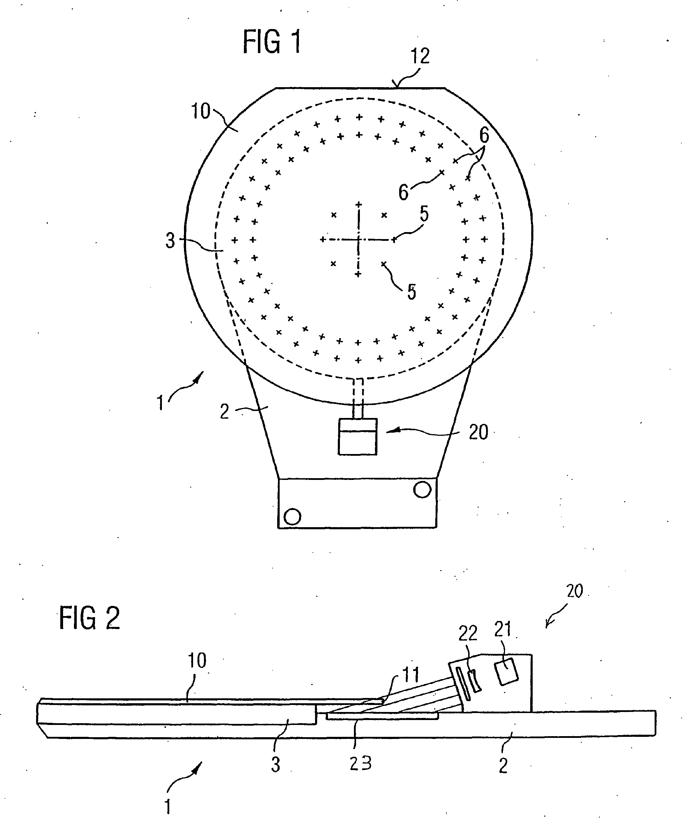

Auf dem Grundkörper 2 des Greifers 1 ist noch eine Einrichtung 20 zum Erfassen der Lage des Umfangsrandes 11 des Wafers und des Flat vorgesehen. Diese Einrichtung 20 besteht im gezeigten Ausführungsbeispiel, wie in Fig. 2 dargestellt, aus einer Laserstrahlquelle 21, insbesondere einer Halbleiterlaserstrahlquelle, einer der Laserstrahlquelle 21 zugeordneten Optik 22 und einem fotosensitiven Sensor 23, der auf dem Grundkörper 2 so angeordnet ist, dass die Laserstrahlen auf ihn auftreffen.

Wie Fig. 2 zeigt, wird ein Teil der Laserstrahlen durch den auf dem Träger 3 angeordneten Wafer 10 abgedeckt, so dass dessen Rand 11 abgetastet bzw. abgescannt wird und auf dem fotosensitiven Sensor 23 Schatten erzeugt.

Auf diese Art und Weise kann durch Drehen des auf dem Träger 3 gehaltenen Wafers 10 der Verlauf eines Umfangsrandes 11 bzw. einer Waferkante erfasst werden. Aus dem so über den Sensor erfassten Verlauf des Umfangsrandes 11 kann einerseits errechnet werden, wie weit außermittig, d.h. dezentriert, der Wafer 10 auf dem Träger 3 sitzt, und anderseits kann die Lage des Flats 12 des Wafers 10 bestimmt werden.

Wie erwähnt, kann anstelle des in Fig. 2 gezeigten optischen Sensors mit einem Halbleiterlaser auch ein optischer Sensor mit Hilfe einer Leuchtdiode angewendet werden.

Mit Hilfe des so beschriebenen Greifers kann wie folgt gearbeitet werden:

Im ersten Schritt fährt der Greifer in eine Horde ein und ein Wafer wird vom Träger 3 des Greifers 1 aufgenommen und mit Hilfe der Bernoulli/Vakuum-Düsen gespannt, d.h. gehalten und geflatet.

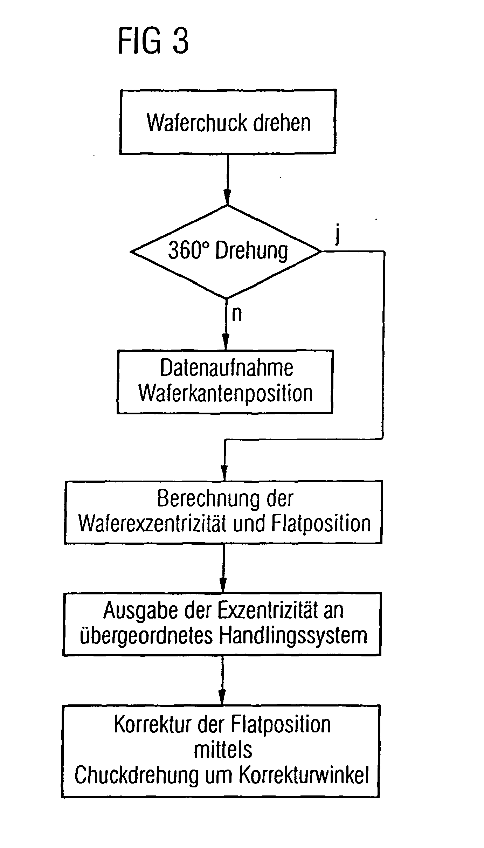

Dann wird der Wafer 10 aus der Horde entnommen. Als nächster Schritt, siehe Fig. 3, wird der Träger 3 durch seinen Antrieb um wenigstens 360° gedreht. Dabei wird von dem Kantensensor 20 der Verlauf der Waferkante bzw. des Umfangsrandes 11 gemessen. Aus den Daten über den Verlauf der Waferkante bzw. des Umfangsrandes 11 beim Drehen des Wafers 10 mit Hilfe des Trägers 3 wird mit einem Mikrokontroller die Lage des Flats 12 des Wafers 10 und die Dezentrierung des Wafers 10 zum Drehmittelpunkt des Trägers 3 errechnet. Durch den Mikrokontroller wird der drehbare Träger 3 derart angesteuert, dass er sich so weit dreht, dass der Flat 12 des Wafers 10 in die gewünschte Richtung zeigt. Schließlich übermittelt der Mikrokontroller die errechnete Dezentrierung des Wafers 10 an die Steuerung des Roboters, an dem der Greifer 1 befestigt ist, um diesen so anzusteuern, dass der Wafer 10 in genau der gewünschten Lage an eine weitere Behandlungsstufe oder eine weitere Ablage, z.B. eine Horde oder ein Boot, abgelegt wird, wobei meist ein genau zentriertes Ablegen angestrebt ist.

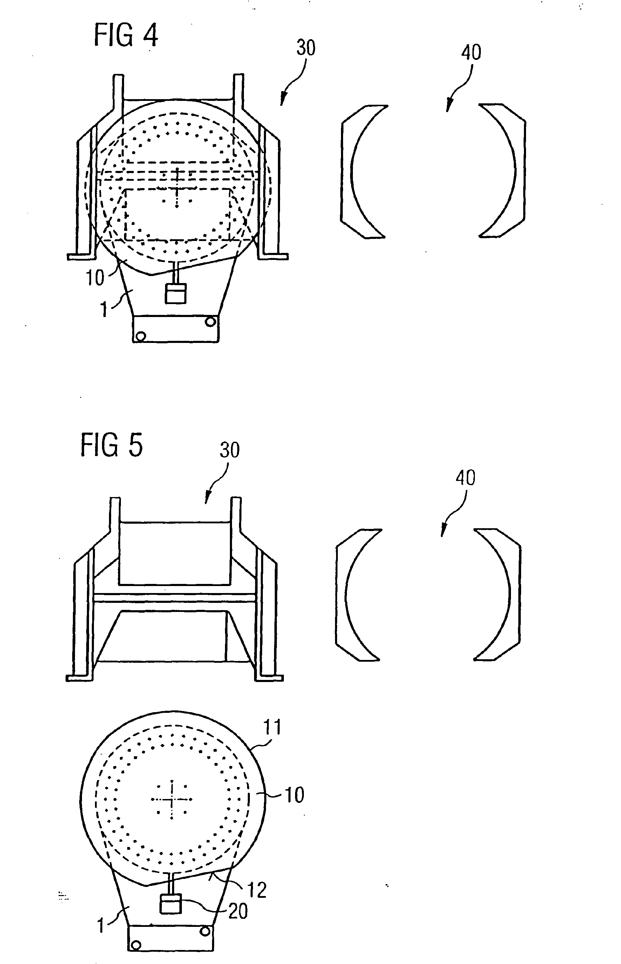

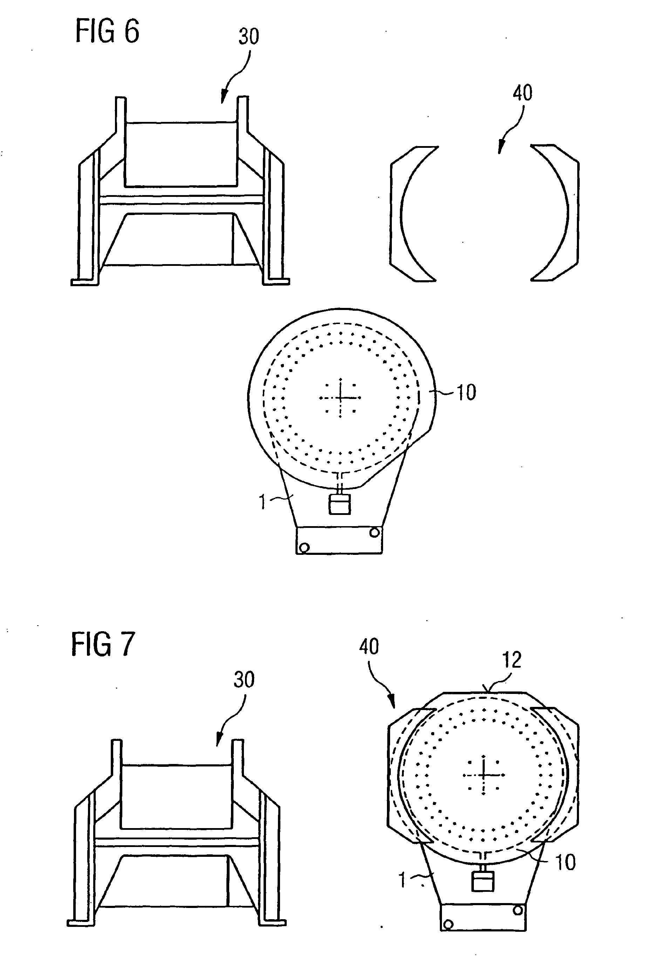

Dieser Ablauf der Schritte ist in den Fig. 4 bis 7 nochmals dargestellt. Fig. 4 zeigt, wie ein Wafer 10 aus einer Horde 30, in der mehrere Wafer mit nicht ausgerichteten Flats undefiniert abgelegt sind, durch Wirkung der Bernoulli-Düsen gehalten und mit Hilfe der mit Unterdruck beaufschlagbaren Düsen geflatet, entnommen werden kann. Wie in den Fig. 5 und 6 angedeutet, wird der Wafer 10 nun gedreht, um den Verlauf des Randes 11 des Wafers 10 zu erfassen, wobei während dieser Tätigkeit, also während des Scannens des Waferrandes 11 mit Hilfe des optischen Sensors 20 und dem Erfassen der Lage des Flats 12 des Wafers 10 bereits eine Bewegung des Wafers durch den ihn tragenden Greifer zu einer Übergabestation erfolgen kann, um Zeit zu sparen, wie dies in den Fig. 5 und 6 gezeigt ist.

Wenn der Greifer 10 bei der Übergabestation 40 angekommen ist, ist der Wafer 10 durch die Ansteuerung des Trägers 3 des Greifers 1 so weit gedreht worden, dass der Flat 12 eine gewünschte Lage einnimmt, z.B. die in Fig. 7 gezeigte Lage. Die Übergabe des Wafers 10 auf die Übergabestation 40 findet mit korrigierten Positionsdaten statt, so dass der Wafer 10 zentrisch auf der Station zu liegen kommt.

Die Übergabestation 40 kann auch so ausgeführt sein, dass dort gleichzeitig ein Bearbeitungsprozess stattfindet. Alternativ besteht auch die Möglichkeit, dass von der Übergabestation 40 ein weiterer Transport zu weiteren Bearbeitungsstufen für den Wafer durchgeführt wird.

Es ist erkennbar, dass durch die erfindungsgemäße Arbeitsweise Greifer verwendet werden können, die ohne Zentrier-Schrägflächen oder ähnliches oder Zentrierstifte, d.h. sogenannte pins, ausgeführt sind, so dass eine weitere Vereinfachung dieser Greifer möglich ist und so gearbeitet werden kann, dass der Umfangsrand des Wafers beim Aufnehmen aus einer Horde und beispielsweise Ablegen in ein Quarzboot oder eine andere Übergabe- oder Bearbeitungsstation nicht mehr berührt wird.

Zusammenfassend kann ein bevorzugtes Ausführungsbeispiel des erfindungsgemäßen Verfahrens und der Vorrichtung zum Handhaben von Halbleiterwafern wie folgt beschrieben werden:

Um willkürlich in Materialträgern, wie Horden oder Booten, abgelegte Wafer mit Hilfe eines Bernoulli/Vakuum-Greifers, der keine Zentriereinrichtungen, wie pins oder dgl., besitzt, genau ausgerichtet in andere Materialträger oder Behandlungsvorrichtungen abzulegen, wird die Lage des Wafers auf dem Greifer ermittelt. Hierzu wird der Wafer auf dem Greifer gedreht und während des Drehens der Rand des Wafers mit einem optischen Sensor gescannt. Aus den so ermittelten Daten werden die Koordinaten der Lage des Mittelpunktes des Wafer relativ zum Greifer, insbesondere zum Mittelpunkt des Drehens des Wafer, und - falls erforderlich - auch die Lage des Flats des Wafers errechnet. Beim Ablegen des Wafers wird der den Greifer tragende Roboter unter Berücksichtigung der errechneten Lage des Mittelpunktes des Wafers so angesteuert, dass der Wafer in zentrierter Lage abgelegt wird. Durch entsprechend der errechneten Lage des Flats ausgeführtes Drehen des Wafers vor dem Ablegen kann auch sein Flat in die gewünschte Lage ausgerichtet werden.

## Patentansprüche

1. Verfahren zum Handhaben von Wafern, insbesondere von dünnen Wafern (10), wobei der Wafer (10) von einem Träger (3) aufgenommen wird, wobei der Wafer (10) auf dem Träger (3) in Drehung versetzt wird, wobei der Abstand des Mittelpunktes des Wafers (10) vom Mittelpunkt der Drehung ermittelt wird, wobei der Wafer (10) beim Ablegen so ausgerichtet wird, dass sein Mittelpunkt in der abgelegten Stellung eine definierte Lage einnimmt,
wobei ein optischer Sensor (20) verwendet wird,
wobei der optische Sensor auf einem Grundkörper (2) angeordnet ist auf dem auch der Träger (3) angeordnet ist, wobei der optische Sensor (20) einen fotosensitiven Sensor (23) umfasst, der im Bereich des Randes des Trägers (3) am Grundkörper (2) eines Greifers (1) vorgesehen ist,
**dadurch gekennzeichnnet**, dass der optische Sensor (20) auch einen Laser (21) oder eine Leuchtdiode und eine dem Laser (21) oder der Leuchtdiode zugeordnete Optik (22) umfasst ,
und der fotosensitive Sensor 23) so auf dem Grundkörper (2) angeordnet wird, dass die Laserstrahlen des Lasers (21) oder die Strahlen der Leuchtdiode auf ihn auftreffen,
wobei ein Teil der Laserstrahlen des Lasers (21) oder der Strahlen der Leuchtdiode durch den auf dem Träger (3) angeordneten Wafer (10) abgedeckt werden, so dass dessen Rand (11) abgetastet wird und auf dem fotosensitiven Sensor (23) Schatten erzeugt,
und dass der Laser (21) oder die Leuchtdiode und die Optik (22) bezogen auf den Drehmittelpunkt des Trägers (3) radial außerhalb des fotosensitiven Sensors (23) angeordnet werden, derart, dass die Laserstrahlen des Lasers (21) oder die Strahlen der Leuchtdiode schräg auf den fotosensitiven Sensor (23) auftreffen.

2. Verfahren nach Anspruch 1, **dadurch gekennzeichnet, dass** die Lage des Wafers (10) durch Erfassen und/oder Abtasten seines Umfangsrandes (11) ermittelt wird.

3. Verfahren nach Anspruch 1 oder 2, **dadurch gekennzeichnet, dass** beim Drehen des Wafers (10) die Lage einer Markierung (12) an seinem Umfangsrand (11), insbesondere einer Abflachung (12) oder einer Kerbe, erfasst wird und dass der Wafer (10) vor dem Ablegen um den Winkel gedreht wird, der einer vorgesehenen Lage der Markierung (12) entspricht.

4. Verfahren nach einem der Ansprüche 1 bis 3, **dadurch gekennzeichnet , dass** zum Ermitteln des Mittelpunktes des Wafers (10) dessen Umfangsrand (11) optisch abgetastet wird.

5. Verfahren nach einem der Ansprüche 3 oder 4 soweit auf Anspruch 3 rückbezogen, **dadurch gekennzeichnet, dass** zum Ermitteln der Lage der Markierung (12) der Umfangsrand (11) des Wafers (10) optisch abgetastet wird.

6. Verfahren nach einem der Ansprüche 1 bis 5, **dadurch gekennzeichnet, dass** aus den Daten des Verlaufs des Umfangsrandes (11) des Wafers (10) durch eine Recheneinheit der Mittelpunkt errechnet wird.

7. Verfahren nach Anspruch 6, **dadurch gekennzeichnet, dass** die Koordinaten der Lage des Mittelpunktes des Wafers (10) relativ zur Lage des Zentrums des Drehens des Wafers (10) errechnet werden.

8. Verfahren nach Anspruch 6 oder 7, **dadurch gekennzeichnet, dass** die Daten des errechneten Mittelpunktes des Wafers an ein Handhabungssystem weitergegeben und dieses beim Ablegen des Wafers (10) so gesteuert wird, dass der Mittelpunkt des Wafers (10) in der abgelegten Position eine vorbestimmte Lage einnimmt.

9. Verfahren nach einem der Ansprüche 3 bis 8 soweit auf Anspruch 3 rückbezogen, **dadurch gekennzeichnet, dass** die vom optischen Sensor (20) erfasste Lage der Markierung (12), insbesondere der Abflachung (12) oder der Kerbe, zur Ansteuerung der Drehbewegung des Wafers herangezogen wird, um die Markierung (12) in eine vorgegebene Lage auszurichten.

10. Vorrichtung zum Durchführen des Verfahrens nach einem der Ansprüche 1 bis 9, mit einem Greifer (1), an dem ein drehbarer Träger (3) für einen Wafer (10) gelagert ist, wobei an dem Träger (3) mindestens eine Einrichtung (5, 6) zum Halten und zum Ebnen eines Wafers (10) vorgesehen ist,
und wobei dem Träger (3) ein Drehantrieb zugeordnet ist, wobei auf dem Greifer (1) ein Sensor (20) zum Erfassen des Umfangsrandes (11) des Wafers (10) vorgesehen ist,
und wobei eine Einheit vorgesehen ist, die aus den Daten für die Lage des Umfangsrandes (11) des Wafers (10) dessen Mittelpunkt und/oder den Abstand dieses Mittelpunktes vom Drehmittelpunkt des Trägers (3) des Greifers (1) ermittelt, wobei der Sensor (20) ein optischer Sensor (20) ist,
wobei der optische Sensor (20) auf einem Grundkörper (2) des Greifers (1) angeordnet ist, wobei der optische Sensor (20) einen fotosensitiven Sensor (23) umfasst, der im Bereich der Randes des Trägers (3) am Grundkörper (2) des Greifers (1) vorgesehen ist,
**dadurch gekennzeichnet, dass** der optische Sensor auch einen Laser (21) oder eine Leuchtdiode und eine dem Laser (21) oder der Leuchtdiode zugeordnete Optik (22) umfasst,
und der fotosensitive Sensor (23) so auf dem Grundkörper (2) angeordnet ist, dass die Laserstrahlen des Lasers (21) oder die Strahlen der Leuchtdiode auf ihn auftreffen,
wobei ein Teil der Laserstrahlen des Lasers (21) oder der Strahlen der Leuchtdiode durch den auf dem Träger (3) angeordneten Wafer (10) abgedeckt ist, so dass dessen Rand (11) abgetastet wird und auf dem fotosensitiven Sensor (23) Schatten erzeugt,
und dass der Laser (21) oder die Leuchtdiode und die Optik (22) bezogen auf den Drehmittelpunkt des Trägers (3) radial außerhalb des fotosensitiven Sensors (23) angeordnet sind, derart, dass die Laserstrahlen des Lasers (21) oder die Strahlen der Leuchtdiode schräg auf den fotosensitiven Sensor (23) auftreffen.

11. Vorrichtung nach Anspruch 10,
**dadurch gekennzeichnet , dass** eine Einheit vorgesehen ist, die aus den Daten für die Lage des Umfangsrandes (11) des Wafers (10) die Lage einer Markierung am Umfangsrand des Wafers (10) auf dem Träger (3) ermittelt, insbesondere eines Flats oder einer Kerbe.

12. Vorrichtung nach Anspruch 10 oder 11, **dadurch gekennzeichnet, dass** die Einrichtung (5, 6) zum Halten und/oder Ebnen mindestens eine Bernoulli-Düse (5) und/oder mindestens eine mit Unterdruck beaufschlagbare Öffnung (6) enthält,
und/oder dass die Einheit zum Ermitteln einen Prozessor enthält, der die Lage des Mittelpunktes oder der Markierung berechnet.

13. Vorrichtung nach Anspruch 11 oder 12 soweit auf Anspruch 11 rückbezogen, **dadurch gekennzeichnet , dass** der Prozessor ein Mikrokontroller ist,
und/oder dass der Prozessor auf Grund der ihm übermittelten Daten über die Lage der Markierung (12) derart mit der Ansteuerung für den Drehantrieb des Trägers (3) verbunden ist, dass dieser den Wafer (10) dreht, um die Markierung (12) in eine vorbestimmte Lage auszurichten.

14. Vorrichtung nach einem der Ansprüche 10 bis 13, **dadurch gekennzeichnet, dass** der optische Sensor (20) ein Sensor mit einem Halbleiterlaser (21) ist.

15. Vorrichtung nach einem der Ansprüche 10 bis 14, **dadurch gekennzeichnet, dass** der Prozessor mit der Steuerung eines den Greifer (1) tragenden Roboters verknüpft ist, derart, dass der Roboter den Greifer (1) so ausrichtet, dass beim Ablegen eines vom Greifer (1) gehaltenen Wafers (10) dessen Mittelpunkt eine genau vorbestimmte Lage einnimmt.

16. Vorrichtung nach einem der Ansprüche 12 bis 15 soweit auf Anspruch 12 rückbezogen, **dadurch gekennzeich**n e t , dass der Prozessor mit der Steuerung eines den Greifer (1) tragenden Roboters verknüpft ist, derart, dass der Roboter den Greifer (1) so ausrichtet, dass beim Ablegen eines vom Greifer (1) gehaltenen Wafers (10) dessen Markierung eine genau vorbestimmte Lage einnimmt.

## Claims

1. Method for handling wafers, more particularly thin wafers (10), wherein the wafer (10) is received by a carrier (3), wherein the wafer (10) is caused to rotate on the carrier (3), wherein the distance between the midpoint of the wafer (10) and the midpoint of rotation is determined, wherein the wafer (10) is oriented during placement such that its midpoint in the placed position occupies a defined position,
wherein an optical sensor (20) is used,
wherein the optical sensor is arranged on a base body (2), on which the carrier (3) is also arranged, wherein the optical sensor (20) comprises a photosensitive sensor (23), which is provided in the region of the edge of the carrier (3) on the base body (2) of a gripper (1),
**characterized in that** the optical sensor (20) also comprises a laser (21) or a light-emitting diode and an optical unit (22) assigned to the laser (21) or to the light-emitting diode,
and the photosensitive sensor (23) is arranged on the base body (2) in such a way that the laser beams of the laser (21) or the beams of the light-emitting diode impinge on it,
wherein a portion of the laser beams of the laser (21) or of the beams of the light-emitting diode is covered by the wafer (10) arranged on the carrier (3), such that the edge (11) of said wafer is scanned and produces shadows on the photosensitive sensor (23),
and **in that** the laser (21) or the light-emitting diode and the optical unit (22) are arranged radially outside the photosensitive sensor (23) relative to the rotational midpoint of the carrier (3), in such a way that the laser beams of the laser (21) or the beams of the light-emitting diode impinge obliquely on the photosensitive sensor (23).

2. Method according to Claim 1, **characterized in that** the position of the wafer (10) is determined by detecting and/or scanning its circumferential edge (11).

3. Method according to Claim 1 or 2, **characterized in that**, during the rotation of the wafer (10), the position of a marking (12) on its circumferential edge (11) in particular of a flat (12) or of a notch, is detected, and **in that** the wafer (10), prior to placement, is rotated by the angle corresponding to an envisaged position of the marking (12).

4. Method according to any of Claims 1 to 3, **characterized in that**, in order to determine the midpoint of the wafer (10), the circumferential edge (11) thereof is optically scanned.

5. Method according to either of Claims 3 and 4 in so far as referring back to Claim 3, **characterized in that**, in order to determine the position of the marking (12), the circumferential edge (11) of the wafer (10) is optically scanned.

6. Method according to any of Claims 1 to 5, **characterized in that** the midpoint is calculated from the data of the profile of the circumferential edge (11) of the wafer (10) by means of a computing unit.

7. Method according to Claim 6, **characterized in that** the coordinates of the position of the midpoint of the
wafer (10) relative to the position of the centre of the rotation of the wafer (10) are calculated.

8. Method according to Claim 6 or 7, **characterized in that** the data of the calculated midpoint of the wafer are forwarded to a handling system and the latter is controlled during the placement of the wafer (10) such that the midpoint of the wafer (10) in the placed position occupies a predetermined position.

9. Method according to any of Claims 3 to 8 in so far as referring back to Claim 3, **characterized in that** the position of the marking (12), more particularly of the flat (12) or of the notch, detected by the optical sensor (20) is used for driving the rotational movement of the wafer in order to orient the marking (12) in a predetermined position.

10. Apparatus for carrying out the method according to any of Claims 1 to 9, comprising a gripper (1) on which a rotatable carrier (3) for a wafer (10) is mounted, wherein at least one device (5, 6) for holding and for levelling a wafer (10) is provided on the carrier (3), and wherein a rotary drive is assigned to the carrier (3), wherein a sensor (20) for detecting the circumferential edge (11) of the wafer (10) is provided on the gripper (1),
and wherein a unit is provided which determines from the data for the position of the circumferential edge (11) of the wafer (10) the midpoint thereof and/or the distance between said midpoint and the rotational midpoint of the carrier (3) of the gripper (1),
wherein the sensor (20) is an optical sensor (20), wherein the optical sensor (20) is arranged on a base body (2) of the gripper (1), wherein the optical sensor (20) comprises a photosensitive sensor (23), which is provided in the region of the edge of the carrier (3) on the base body (2) of the gripper (1),
**characterized in that** the optical sensor also comprises a laser (21) or a light-emitting diode and an optical unit (22) assigned to the laser (21) or to the light-emitting diode,
and the photosensitive sensor (23) is arranged on the base body (2) in such a way that the laser beams of the laser (21) or the beams of the light-emitting diode impinge on it,
wherein a portion of the laser beams of the laser (21) or of the beams of the light-emitting diode is covered by the wafer (10) arranged on the carrier (3), such that the edge (11) of said wafer is scanned and produces shadows on the photosensitive sensor (23),
and **in that** the laser (21) or the light-emitting diode and the optical unit (22) are arranged radially outside the photosensitive sensor (23) relative to the rotational midpoint of the carrier (3), in such a way that the laser beams of the laser (21) or the beams of the light-emitting diode impinge obliquely on the photosensitive sensor (23).

11. Apparatus according to Claim 10,
**characterized in that** a unit is provided which determines from the data for the position of the circumferential edge (11) of the wafer (10) the position of a marking on the circumferential edge of the wafer (10) on the carrier (3), more particularly of a flat or of a notch.

12. Apparatus according to Claim 10 or 11, **characterized in that** the device (5, 6) for holding and/or levelling contains at least one Bernoulli nozzle (5) and/or at least one opening (6) to which reduced pressure can be applied,
and/or **in that** the unit for determining contains a processor that calculates the position of the midpoint or of the marking.

13. Apparatus according to Claim 11 or 12 in so far as referring back to Claim 11, **characterized in that** the processor is a microcontroller,
and/or **in that** the processor, on the basis of the data about the position of the marking (12) which are communicated to it, is connected to the driving system for the rotary drive of the carrier (3) in such a way that the latter rotates the wafer (10) in order to orient the marking (12) in a predetermined position.

14. Apparatus according to any of Claims 10 to 13, **characterized in that** the optical sensor (20) is a sensor comprising a semiconductor laser (21).

15. Apparatus according to any of Claims 10 to 14, **characterized in that** the processor is linked to the controller of a robot carrying the gripper (1), in such a way that the robot orients the gripper (1) such that, during the placement of a wafer (10) held by the gripper (1), the midpoint of said wafer occupies a precisely predetermined position.

16. Apparatus according to any of Claims 12 to 15 in so far as referring back to Claim 12, **characterized in that** the processor is linked to the controller of a robot carrying the gripper (1), in such a way that the robot orients the gripper (1) such that, during the placement of a wafer (10) held by the gripper (1), the marking of said wafer occupies a precisely predetermined position.

## Revendications

1. Procédé de manipulation, notamment de plaquettes ( 10 ) minces, la plaquette ( 10 ) étant reçue par un support ( 3 ), la plaquette ( 10 ) étant mise en rotation sur le support ( 3 ), la distance du centre de la plaquette ( 10 ) au centre de rotation étant déterminée, la plaquette ( 10 ) étant orientée, lorsqu'elle est déposée, de manière à ce que, dans la position déposée, son centre prenne une position définie, dans lequel on utilise un capteur ( 20 ) optique,
dans lequel le capteur optique est disposé sur une embase ( 2 ), sur laquelle est disposé aussi le support ( 3 ), le capteur ( 20 ) optique comprenant un capteur ( 23 ) photosensible, qui est prévu dans la zone du bord du support ( 3 ) sur l'embase ( 2 ) d'un élément ( 1 ) de préhension, **caractérisé en ce que** le capteur ( 20 ) optique comprend aussi un laser ( 21 ) ou une diode électroluminescente et une optique ( 22 ) associée au laser ( 21 ) ou à la diode électroluminescente,
et le capteur ( 23 ) photosensible est disposé sur l'embase ( 2 ), de manière à ce que les rayons du laser ( 21 ) ou les rayons de la diode électroluminescente le rencontrent,
une partie des rayons du laser ( 21 ) ou des rayons de la diode électroluminescente étant recouverte par la plaquette ( 10 ) disposée sur le support ( 3 ), de manière à ce que le bord ( 11 ) de celle-ci soit balayé et de manière à produire des ombres sur le capteur ( 23 ) photosensible,
et **en ce que** l'on dispose le laser ( 21 ) ou la diode électroluminescente et l'optique ( 22 ) à l'extérieur du capteur ( 23 ) photosensible radialement par rapport au centre de rotation du support ( 3 ), de manière à ce que les rayons du laser ( 21 ) ou les rayons de la diode électroluminescente rencontrent, en étant inclinés, le capteur ( 23 ) photosensible.

2. Procédé suivant la revendication 1, **caractérisé en ce qu'**on détermine la position de la plaquette ( 10 ) en détectant et/ou en balayant son bord ( 11 ) de pourtour.

3. Procédé suivant la revendication 1 ou 2, **caractérisé en ce que**, lorsque la plaquette ( 10 ) tourne, on détecte la position d'un repère ( 12 ) sur son bord ( 11 ) de pourtour, notamment d'un méplat ( 12 ) ou d'une entaille, et **en ce qu'**on fait tourner la plaquette ( 10 ) avant le dépôt de l'angle, qui correspond à une position prévue du repère ( 12 ).

4. Procédé suivant l'une des revendications 1 à 3, **caractérisé en ce que**, pour la détermination du centre ou de la plaquette ( 10 ), on balaye optiquement son bord ( 11 ) de pourtour.

5. Procédé suivant l'une des revendications 3 ou 4, dans la mesure où elle se rapporte à la revendication 3, **caractérisé en ce que**, pour la détermination de la position du repère ( 12 ), on balaye optiquement le bord ( 11 ) de pourtour de la plaquette ( 10 ).

6. Procédé suivant l'une des revendications 1 à 5, **caractérisé en ce qu'**on calcule le centre par une unité de calcul à partir des données du tracé du bord ( 11 ) de pourtour.

7. Procédé suivant la revendication 6, **caractérisé en ce qu'**on calcule les coordonnées de la position du centre de la plaquette ( 10 ) par rapport à la position du centre de rotation de la plaquette ( 10 ).

8. Procédé suivant la revendication 6 ou 7, **caractérisé en ce qu'**on achemine les données du centre calculées de la plaquette vers un système de manipulation et on commande celui-ci, lors du dépôt de la plaquette ( 10 ), de manière à ce que le centre de la plaquette ( 10 ) prenne, dans la position déposée, une position déterminée à l'avance.

9. Procédé suivant l'une des revendications 3 à 8, dans la mesure où elles se rapportent à la revendication 3, **caractérisé en ce qu'**on tire parti de la position, détectée par le capteur ( 20 ) optique du repère ( 12 ), notamment du méplat ( 12 ) ou de l'entaille, pour commander le mouvement de rotation de la plaquette, afin de mettre le repère ( 12 ) dans une position prescrite.

10. Dispositif pour la mise en oeuvre du procédé suivant l'une des revendications 1 à 9, comprenant un élément ( 1 ) de préhension, sur lequel un support ( 3 ) d'une plaquette ( 10 ) est monté, au moins un dispositif ( 5, 6 ) de maintien et de mise à plat d'une plaquette ( 10 ) étant prévu sur le support ( 3 ) et un entraînement en rotation étant associé au support ( 3 ), un capteur ( 20 ) de détection du bord de pourtour de la plaquette ( 10 ) étant prévu sur l'élément de préhension et il est prévu une unité qui détermine, à partir des données de position du bord ( 11 ) de pourtour de la plaquette ( 10 ), son centre et/ou la distance de ce centre au centre de rotation du support ( 3 ) de l'élément ( 1 ) de préhension, le capteur ( 20 ) étant un capteur ( 20 ) optique, le capteur ( 20 ) optique étant disposé sur une embase ( 2 ) de l'élément
( 1 ) de préhension, le capteur ( 20 ) optique comprenant un capteur ( 23 ) photosensible, qui est prévu dans la zone du bord du support ( 3 ) sur l'embase ( 2 ) de l'élément ( 1 ) de préhension,
**caractérisé en ce que** le capteur optique comprend aussi un laser ( 21 ) ou une diode électroluminescente et une optique ( 22 ) associée au laser ( 21 ) ou à la diode électroluminescente,
et le capteur ( 23 ) photosensible est disposé sur l'embase ( 2 ), de manière à ce que les rayons du laser ( 21 ) ou les rayons de la diode électroluminescente le rencontrent,
une partie des rayons du laser ( 21 ) ou des rayons de la diode électroluminescente étant recouverte par la plaquette ( 10 ) disposée sur le support ( 3 ), de manière à ce que le bord ( 11 ) de celle-ci soit balayé et de manière à produire des ondes sur le capteur ( 23 ) photosensible,
et **en ce que** le laser ( 21 ) ou la diode électroluminescente et l'optique ( 22 ) sont disposés à l'extérieur du capteur ( 23 ) photosensible radialement par rapport au centre de rotation du support ( 3 ), de manière à ce que les rayons du laser ( 21 ) ou les rayons de la diode électroluminescente rencontrent le capteur photosensible en étant inclinés.

11. Dispositif suivant la revendication 10,
**caractérisé en ce qu'**il est prévu une unité qui, à partir des données de la position du bord ( 11 ) de pourtour de la plaquette ( 10 ), détermine la position d'un repère sur le bord de pourtour de la plaquette ( 10 ) sur le support ( 3 ), notamment un méplat ou une entaille.

12. Dispositif suivant la revendication 10 ou 11, **caractérisé en ce que** le dispositif ( 5, 6 ) de maintien et/ou de mise à plat comporte au moins une buse ( 5 ) de Bernoulli et/ou au moins une ouverture ( 6 ) pouvant être mise en dépression, et/ou **en ce que** l'unité de détermination comporte un processeur, qui calcule la position du centre ou du repère.

13. Dispositif suivant la revendication 11 ou 12, dans la mesure où elle se rapporte à la revendication 11, **caractérisé en ce que** le processeur est une micro-unité de commande,
et/ou **en ce que** le processeur est relié, sur la base des données qui lui sont transmises sur la position du repère ( 12 ), avec la commande de l'entraînement en rotation du support ( 3 ), de telle sorte que celui-ci fait tourner la plaquette ( 10 ) pour mettre le repère ( 12 ) en une position déterminée à l'avance.

14. Dispositif suivant l'une des revendications 10 à 13, **caractérisé en ce que** le capteur ( 20 ) optique est un capteur ayant un laser ( 21 ) à semiconducteur.

15. Dispositif suivant l'une des revendications 10 à 14, **caractérisé en ce que** le processeur est combiné à la commande d'un robot portant l'élément ( 1 ) de préhension, de manière à ce que le robot oriente l'élément ( 1 ) de préhension de façon à ce que, lors du dépôt d'une plaquette ( 10 ) tenue par l'élément ( 1 ) de préhension, le centre de la plaquette prenne une position déterminée à l'avance avec précision.

16. Dispositif suivant l'une des revendications 12 à 15, dans la mesure où elles se rapportent à la revendication 12, **caractérisé en ce que** le processeur est combiné à la commande d'un robot portant l'élément ( 1 ) de préhension, de manière à ce que le robot oriente l'élément ( 1 ) de préhension de façon à ce que, lors du dépôt d'une plaquette ( 10 ) retenue par l'élément ( 1 ) de préhension, le repère de la plaquette prenne une position déterminée à l'avance avec précision.
